# EUROPÄISCHE PATENTANMELDUNG

(11) **EP 3 333 748 A1**
(43) Veröffentlichungstag der Anmeldung: **13.06.2018**
(21) Anmeldenummer: 16202905.2
(22) Anmeldetag: 08.12.2016
(51) Int. Cl.: G06F 21/57

(54) **GERÄTEEINHEIT GEEIGNET FÜR DEN BETRIEB IM GESCHÜTZTEN UND/ODER OFFENEN BETRIEBSZUSTAND SOWIE ZUGEHÖRIGES VERFAHREN**

(71) Anmelder: Siemens Aktiengesellschaft, 80333 München (DE)
(72) Erfinder: Aschauer, Hans, 81829 München (DE); Falk, Rainer, 85586 Poing (DE); Fries, Steffen, 85598 Baldham (DE); Heintel, Markus, 81377 München (DE); Merli, Dominik, 86609 Donauwörth (DE)

(57) **Zusammenfassung**

Die vorliegende Erfindung beansprucht eine Geräteeinheit (GE) umfassend ein Modul (M), welches die Geräteeinheit (GE) mit einem Betriebszustand von unterschiedlichen Betriebszuständen beim Hochfahrablauf und/oder bei laufendem Betrieb der Geräteeinheit konfigurieren kann,
wobei ein erster geschützter Betriebszustand der unterschiedlichen Betriebszustände dazu ausgelegt ist, das Ausführen von zumindest einem vorbestimmbaren Betriebsablauf zuzulassen und diesen gegebenenfalls mit festgelegten kryptographischen Mitteln zu schützen,
wobei mindestens ein zweiter Betriebszustand der unterschiedlichen Betriebszustände dazu ausgelegt ist, den ersten geschützten Betriebszustand zu deaktivieren und zumindest einen anderen änderbaren Betriebsablauf zuzulassen und diesen gegebenenfalls mit vorgebbaren kryptographischen Mitteln zu schützen, und
wobei, wenn der konfigurierte Betriebszustand dem ersten Betriebszustand entspricht, das Modul (M) diesen beibehält oder wenn der konfigurierte Betriebszustand dem mindestens zweiten Betriebszustand entspricht, das Modul (M) den ersten Betriebszustand deaktiviert und den mindestens zweiten Betriebszustand einleitet und/oder beibehält.

## Beschreibung

Die vorliegende Erfindung betrifft eine Geräteeinheit geeignet für den Betrieb im geschützten und/oder offenen Betriebszustand sowie zugehöriges Verfahren und ein zugehöriges Computerprogramm(-produkt).

### Hintergrund der Erfindung

Eingebettete Systeme (Embedded Systems bzw. Devices) kommen oft im Umfeld von Industrie 4.0, im industriellen Internet und in Automatisierungssystemen zum Einsatz. Sie können in Einzelfällen auf ähnlicher Hardware wie Arbeitsplatzcomputer basieren. Für sie sind jedoch in der Regel stark einschränkende Randbedingungen wie minimale Kosten, geringer Platz-, Energie- und Speicherverbrauch gefordert. Einzelne Komponenten wie Prozessor und Arbeitsspeicher basieren oft auf Weiterentwicklungen älterer Komponenten. Dadurch wird die langfristige Einsetzbarkeit und Ersatzteilbeschaffung erleichtert. Jüngere eingebettete Systeme basieren häufig auf Prozessorplattformen, die in Bezug auf die Peripheriemodule hochintegriert sind und durch moderne Stromspartechniken deutlich weniger Energie verbrauchen. In einem eingebetteten System muss die Software oft Echtzeitanforderungen genügen. Die Software auf einem solchen Gerät wird Firmware genannt. Sie befindet sich gewöhnlich auf einem ROM, immer häufiger jedoch auf Flashspeicher. Anwendungsspezifische Software wird auch als Anwendungssoftware oder Applikation bezeichnet.

Ein sogenannter Bootloader sorgt für das Laden des Betriebssystems und der Applikationssoftware beim Hochlauf des Systems. Weiter bietet dieser die Möglichkeit, Betriebssystem und Applikationssoftware im Flashspeicher zu aktualisieren. Prozessoren (CPUs) für eingebettete Systeme, wie z.B. Freescale/NXP i.MX6 oder ti Sitara, FPGA-basierte System on Chips wie Xilinx Zynq oder Altera Cyclone V SoC oder Prozessoren Intel Atom mit UEFI unterstützen Secure Boot. Secure Boot stellt dazu sicher, dass nur autorisierte, unveränderte Software bzw. Firmware ausgeführt wird. Es besteht die Anforderung, die Integrität von industriellen Steuergeräten bzw. eingebetteten Systemen zu schützen.

Bei einem PC-basierten System mit UEFI-BIOS besteht die Möglichkeit, dass die Prüfschlüssel für Secure Boot durch einen berechtigten Nutzer neu gesetzt werden können. Auf Embedded-Plattformen, bei denen die Schlüssel in sogenannte Fuses (brennbare Sicherungen) gebrannt sind, ist dies jedoch nicht möglich. Außerdem hat diese UEFI-BIOS-Variante den Nachteil, dass das Sicherheitsniveau von Secure Boot im Wesentlichen an der Sicherheit des BIOS-Passworts hängt. Dadurch entsteht ein hoher Aufwand, um das BIOS-Passwort sicher zu verwahren. Insbesondere kann ein Nutzer mit Zugriff auf BIOS-Konfigurationseinstellungen auch die Secure Boot Konfiguration ändern.

Weiterhin unterstützen Bootloader wie z.B. U-Boot für Linuxbasierte eingebettete Systeme in manchen Varianten Secure Boot. Auch der Linux Kernel kann die Integrität (Korrektheit, Unversehrtheit) von Kernel-Modulen prüfen und nur korrekt signierte Kernel Module laden.

Es sind verschiedene Arten von Integrität von Nachrichten, Prozessen bzw. Programmen möglich, die in der Informationssicherheit geprüft werden können:
- Korrekter Inhalt
- Unmodifizierter Zustand
- Erkennung von Modifikation, wenn unerwünschte Modifikationen verhindert werden können.
- Temporale Korrektheit: Es sollen relevante zeitliche Bedingungen, wie etwa Reihenfolgen oder maximale Verzögerungszeiten, eingehalten werden.

Die Beschränkung von Secure Boot durch Lizenzbedingungen ist speziell bei den GPL-Lizenzen bekannt.
Die dadurch entstehende Problematik ist auch unter dem Begriff Tivoisierung bekannt.

"Tivoisierung" beschreibt den Vorgang, dass freie Software auf Geräten zum Einsatz kommt, auf denen nur vom Hersteller signierte Software lauffähig ist. Der Nutzer hat dann zwar der Lizenz nach das Recht, sich den Quellkode zu besorgen und nach seinen Vorstellungen zu ändern, nicht jedoch die technische Möglichkeit, die von ihm veränderte Software auf das Gerät des Herstellers aufzuspielen. Nach bestimmten Lizenzbedingungen kann es für den Hersteller erforderlich sein, den Quellkode bereitzustellen bzw. sogar die kryptographischen Schlüssel bzw. Zugangskodes herauszugeben. Im Falle von Secure Boot würde dies die Sicherheit und Integrität von solchen eingebetteten Systemen gefährden.

Es besteht ein Bedarf, die Integrität eines (industriellen) Steuerungssystems zu schützen und trotzdem einem Nutzer die Freiheit zu geben, ggf. eine modifizierte Software bzw. Firmware auf diesem Gerät nutzen zu können. Dadurch soll jedoch die Sicherheit eines industriellen Automatisierungs- und Steuerungssystems nicht gefährdet werden.

Es ist Aufgabe der Erfindung, unter Bereitstellung einer offenen Umgebung für nutzerspezifische Anwendungssoftware dennoch Sicherheits- bzw. Schutzmaßnahmen für ein eingebettetes System sicherzustellen.

### Darstellung der Erfindung

Diese Aufgabe wird durch die unabhängigen Patentansprüche gelöst. Vorteilhafte Weiterbildungen sind Gegenstand der abhängigen Ansprüche.

Die Erfindung beansprucht eine Geräteeinheit, insbesondere eine eingebettete Geräteeinheit, umfassend ein Modul, welches die Geräteeinheit mit einem Betriebszustand von unterschiedlichen Betriebszuständen beim Hochfahrablauf und/oder bei laufendem Betrieb der Geräteeinheit konfigurieren kann. Das Modul kann hierbei in Form von Hardware- und/oder Firmware- und/oder Software ausgestaltet sein.

Ein erster geschützter Betriebszustand der unterschiedlichen Betriebszustände ist dabei dazu ausgelegt, das Laden und/oder Ausführen von zumindest einem vorbestimmbaren Betriebsablauf zuzulassen und den vorbestimmbaren Betriebsablauf gegebenenfalls mit festgelegten kryptographischen Mitteln zu schützen. Dabei kann der vorbestimmbare Betriebsablauf durch ein oder mehrere Programmkodes implementiert sein oder auch als ein solches Modul ausgestaltet sein. Mindestens ein zweiter Betriebszustand der unterschiedlichen Betriebszustände ist dazu ausgelegt, den ersten geschützten Betriebszustand zu deaktivieren und zumindest einen anderen änderbaren Betriebsablauf (ebenfalls in Programmkode(s)/Modul implementierbar) zuzulassen bzw. zu ermöglichen und diesen gegebenenfalls mit vorgebbaren kryptographischen Mitteln zu schützen. Wenn der konfigurierte Betriebszustand dem ersten Betriebszustand entspricht, dann behält das Modul diesen bei, oder wenn der konfigurierte Betriebszustand dem mindestens zweiten Betriebszustand entspricht, deaktiviert das Modul den ersten Betriebszustand und behält bzw. leitet den mindestens zweiten Betriebszustand bei/ein.

Die Deaktivierung kann unwiderruflich sein.
Festgelegte kryptographische Mittel sind hierbei so zu verstehen, dass herstellerseitig Aktualisierungen z.B. durch ein Firmwareupdate möglich sind, jedoch nutzerseitig keine Änderungen vorgenommen werden können und somit für den Nutzer festgeschrieben bzw. vorkonfiguriert bzw. festgelegt sind.

Bei einem Hochfahrablauf sind folgende Startbetriebszustände denkbar:
1. Eine Art neutraler Betriebszustand, der nur während des Hochfahrablaufs eingenommen wird. Dann kann das Modul die Geräteeinheit so konfigurieren, dass nach dem Hochfahrablauf im laufenden Betrieb der erste oder der zweit Betriebszustand eingeleitet bzw. eingenommen wird.
2. Die Geräteeinheit läuft im ersten Betriebszustand hoch, dann kann die der ersten Betriebszustand bei der Konfiguration beibehalten werden oder es wird bei der Konfiguration zum zweiten Betriebszustand gewechselt, dann entspricht der nun konfigurierte Betriebszustand dem zweiten Betriebszustand, wobei dann der erste Betriebszustand deaktiviert wird.
3. Die Geräteeinheit läuft im zweiten Betriebszustand hoch, dann wird der zweite Betriebszustand bei der Konfiguration beibehalten werden. Demnach entspricht der konfigurierte Betriebszustand dem zweiten Betriebszustand, wobei der erste Betriebszustand trotzdem deaktiviert wird, um eine "Rückkehr" zum ersten Betriebszustand zu verhindern.

Normalerweise entspricht der erste Betriebszustand einem von einem Gerätehersteller vorkonfigurierten Betriebszustand und der zweite Betriebszustand einen von einem Nutzer konfigurierbaren Betriebszustand.

Die kryptographischen Mittel können beispielsweise Gerätekonfiguration bzw. Schutzmittel wie Schlüssel (vom Gerätehersteller), Zertifikate, etc. sein.

Eine Weiterbildung der Erfindung sieht vor, dass die Geräteeinheit als ein eingebettetes System oder als Teil eines eingebetteten Systems ausgestaltet ist.

Eine Weiterbildung der Erfindung sieht vor, dass geräteseitig, wenn der Betriebszustand während des Hochfahrablaufs und/oder bei laufendem Betrieb der Geräteeinheit geschützt werden soll, für beim Hochlauf geeignete und/oder im laufenden Betrieb geeignete Integritätsschutzmaßnahmen bereitgestellt sind bzw. bereitgestellt werden können.

Integritätsschutzmaßnahmen beim Hochfahrablauf können z.B. kryptographisch geschütztes Dateisystem, kryptographisch geschützte Konfigurationsdaten in EEPROM sein. Integritätsschutzmaßnahmen zur Laufzeit können z.B. Prozessüberwachung, Host-based Intrusion Detection System sein.

Eine Weiterbildung der Erfindung sieht vor, dass im geschützten Betriebszustand die Integritätsschutzmaßnahmen des Weiteren eine Geräteauthentifizierung und/oder eine Geräteintegritätsattestierung umfassen.

Eine Weiterbildung der Erfindung sieht vor, dass abhängig vom Betriebszustand wenigstens ein Schlüssel für die Integritätsschutzmaßnahmen geräteseitig oder von einem Nutzer bereitstellbar ist bzw. bereitgestellt werden können.

Eine Weiterbildung der Erfindung sieht vor, dass jeweils ein Gerätezertifikat für beide Betriebszustände zur Verfügung gestellt werden kann.

Weiterhin kann je nach Betriebszustand ein privater oder geheimer Geräteauthentifizierungsschlüssel bereitgestellt werden kann.

Eine Weiterbildung der Erfindung sieht vor, dass die Deaktivierung des geschützten Betriebszustandes durch ein Löschen des wenigstens einen Schlüssels und/oder Widerruf des für den geschützten Betriebszustand zur Verfügung gestellten Gerätezertifikats durchführbar ist. Gegebenenfalls kann das Zertifikat durch eine sogenannte Zertifizierungsauthority (CA) wiederhergestellt werden.

Eine Weiterbildung der Erfindung sieht vor, dass Teile der Geräteeinheit aktivierbar und/oder deaktivierbar sind. Abhängig von dem Betriebszustand kann neben den Software-bezogenen Funktionen auch eine Hardware-bezogene Funktion des Gerätes aktiviert oder deaktiviert bzw. konfiguriert werden Dazu können z.B. ein Vertrauensanker, eine Hardware-basierte Geräteintegritätüberwachung bzw. ein Integrity Watchdog, eine Hardware-basierte Selbsttestfunktion, ein Selbstüberwachungssensor, ein Tamper-Sensor zum Erkennen von Manipulationen oder eine Kommunikationseinheit, die z.B. ein Integritätsbestätigungssignal bereitstellt, verwendet werden.

Eine Weiterbildung der Erfindung sieht vor, dass das Modul mittels ein oder mehrerer Software- und/oder Firmwareprogrammkodes und/oder Hardwareschaltung konfigurierbar ist.

Eine Weiterbildung der Erfindung sieht vor, dass der eine oder die Software- und/oder Firmwareprogrammkodes versiegelbar sind. Die Versiegelung kann mittels eines Hashwerts bzw. mittels eines Werts aus einer Referenzdatenbank durchgeführt werden.

Eine Weiterbildung der Erfindung sieht vor, dass mindestens ein weiterer dritter Betriebszustand der Geräteeinheit dazu ausgelegt ist, den ersten und den zweiten Betriebszustand im Parallelbetrieb zuzulassen und gegebenenfalls kryptographisch zu schützen.

Eine Weiterbildung der Erfindung sieht vor, dass der erste, zweite und gegebenenfalls der dritte Betriebszustand durch Gerätekonfiguration, sogenannte Jumper, Aktivierungscodes und/oder durch den Schlüssel und/oder durch das Gerätezertifikat und/oder des Widerrufzustands des Gerätezertifikats und/oder durch einen Vertrauensankers und/oder durch eine Kommunikationsprotokoll mit einer weiteren Stelle festlegbar ist.

Ein weiterer Aspekt der Erfindung sieht ein Verfahren zum Betreiben einer Geräteeinheit in einem Betriebszustand von unterschiedlichen Betriebszuständen beim Hochfahrablauf und/oder bei laufendem Betrieb der Geräteeinheit vor,
wobei in einem ersten geschützten Betriebszustand das (Laden und/oder) Ausführen von zumindest einem vorbestimmbaren Betriebsablaufs zugelassen und gegebenenfalls mit festgelegten kryptographischen Mitteln geschützt wird und
wobei in einem weiteren zweiten Betriebszustand der erste geschützte Betriebszustand deaktiviert wird und zumindest ein anderer änderbarer Betriebsablauf zugelassen und gegebenenfalls mit vorgebbaren kryptographischen Mitteln geschützt wird, wobei der Betriebszustand vor und/oder während des Hochfahrablaufs und/oder des laufenden Betriebs konfiguriert bzw. ermittelt wird und wenn der konfigurierte Betriebszustand dem ersten Betriebszustand entspricht, dann diesen beizubehalten oder wenn der konfigurierte Betriebszustand dem mindestens zweiten Betriebszustand entspricht, den ersten Betriebszustand (ggf. unwiderruflich) zu deaktivieren und den mindestens zweiten Betriebszustand einzuleiten und/oder beizubehalten.

Das Verfahren kann entsprechend der Ausführungsformen/Weiterbildungen zur oben genannten Geräteeinheit aus- bzw. weitergebildet sein.

Ein weiterer Aspekt der Erfindung ist ein Computerprogrammprodukt mit mindestens einem Computerprogramm, das Mittel zur Durchführung des Verfahrens nach einem der vorstehenden Verfahrensansprüche aufweist, wenn das mindestens eine Computerprogramm in den Speicher einer Geräteeinheit und deren Ausführungsformen ladbar ist und zur Ausführung gebracht wird. Das Computerprogramm(-produkt) kann im Wesentlichen analog wie das Verfahren und dessen Ausgestaltungen bzw. Weiterbildungen entsprechend aus- bzw. weitergebildet werden.

### Ausführungsbeispiel(e):

Weitere Vorteile, Einzelheiten und Weiterbildungen der Erfindung ergeben sich aus der nachfolgenden Beschreibung von Ausführungsbeispielen in Verbindung mit den Zeichnungen.

### Dabei zeigen:

Figur 1 eine Geräteeinheit, vorzugsweise eine eingebettete Geräteeinheit,
Figur 2 schematisch ein Ablaufdiagramm, welche Schritte auf der Geräteeinheit ausgeführt werden können.

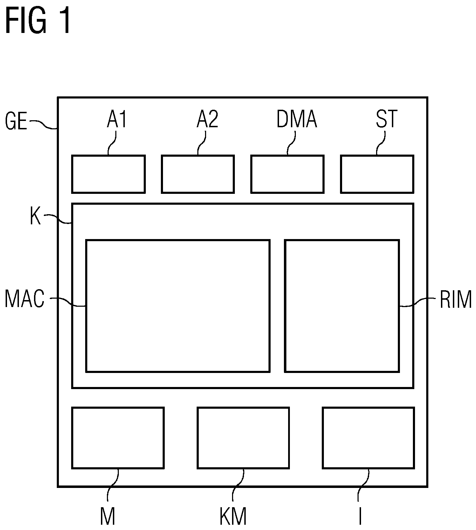

Figur 1 zeigt eine Geräteeinheit GE, die als Gerät ausgestaltet oder in ein Gerät integriert sein kann. Im folgenden Ausführungsbeispiel ist die Geräteeinheit GE für ein Linuxbasiertes eingebettetes Gerät (Embedded Device), vorzugsweise ein Feldgerät oder ein sogenanntes IOT-Gerät. Es kann mehrere Anwendungen bzw. Applikationen z.B. A1, A2, ausführen. Zudem kann ein Steuerungsalgorithmus DMA (Device Management Agent) und/oder ein BIST (Built-in Selbst Test) ausgeführt werden. Im Kernel K, im Beispiel ein Linux-Kernel, laufen in der Regel hardware- bzw. firm- bzw. softwarebasierte Module wie ein Mandatory Access Control Modul MAC und ein Runtime Integrity Monitor Modul RIM ab. Außerdem ist auf der Geräteeinheit ein hardware- bzw. firm- bzw. softwarebasiertes Schlüsselmodul KM zur Speicherung und Verwaltung von kryptographischen Schlüsseln, ein hardware- bzw. firm- bzw. softwarebasierte Integritätsüberwachungsmodul I (Integrity Watchdog) und ein hardware- bzw. firmware- bzw. softwarebasiertes Device Mode Manager vorhanden. Ein hardware-, firmware- und/oder softwarebasiertes Modul M, auch Device Mode Manager genannt, kann die Geräteeinheit in mindestens zwei unterschiedlichen Betriebszuständen bzw. Betriebsmodi konfigurieren und/oder betreiben. In einem ersten sogenannten "closed mode"- oder zweiten sogenannte "open mode"- Betriebsmodus oder in einem weiteren dritten Hybrid-Betriebsmodus, also eine Art Kombination aus beiden zuvor genannten Betriebsmodi "open mode" und "closed mode", kann die Geräteeinheit betrieben werden. Die Entscheidung, welcher Betriebsmodus eingeleitet oder ablaufen soll, erfolgt vorzugsweise beim Systemstart (auch Booten genannt). Abhängig vom aktivierten Betriebsmodus der Geräteeinheit werden die Module Device Key Manager KM, Integrity Watchdog I, Runtime Integrity Monitor RIM, Mandatory Access Control Modul MAC und der Selbsttest BIST durch das Modul M (Device Mode Manager) konfiguriert.

Das Modul M kann abhängig vom aktuellen Betriebsmodus eine kryptographisch geschützte Attestierungsinformation bereitstellen, die den Betriebsmodus angibt. Der Selbsttest BIST, insbesondere inklusive Dateisystem-Integritätsprüfung, Monitor RIM, Mandatory Access Control Modul MAC und Integrity Watchdog sind abhängig vom Betriebsmodus aktiv oder verwenden eine vom Betriebsmodus abhängige Regel (Policy). Das Modul KM (Device Key Manager) kann den Schlüssel abhängig vom Betriebsmodus sperren oder löschen.

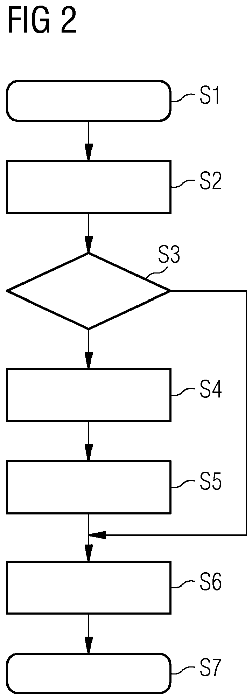

Figur 2 zeigt ein Ablaufdiagramm, dessen einzelne Schritte mit S1 bis S7 gekennzeichnet sind.

Beim Systemstart S1 bzw. Hochfahrablauf wird der Betriebsmodus ermittelt bzw. ausgewählt (S2). Wenn der Betriebsmodus in Schritt S3 "closed mode" ist, dann wird in Schritt S4 die Laufzeit-Integritätsüberprüfung (Runtime Integrity Check) durchgeführt. In Schritt S5 wird der Zugriff auf den Attestierungsschlüssel zur Geräteintegrität freigegeben. Wenn der Betriebsmodus in Schritt S3 nicht "closed mode" ist, dann wird mit Schritt S6 in den laufende Betrieb übergangen, wobei das "Ende" in Schritt S7 symbolisch das Ende des beschrieben Ablaufs beschreibt und nicht das Ende des laufenden Betriebs bedeuten muss.

Im Folgenden sind weitere Ausführungsformen beschrieben:
Eingebettete Systeme wie beispielsweise die oben dargestellte Geräteeinheit GE, insbesondere für kritische industrielle Steuerungssysteme, verfügen häufig über integrierte Schutz-Funktionen/-mittel, um das Ausführen von manipuliertem Quellkode zu verhindern (auch secure boot genannt) oder zu erkennen (auch runtime integrity check genannt).

Solche Funktionen würden jedoch auch verhindern, dass ein Nutzer von ihm beabsichtigt geänderte Software auf einem solchen Gerät ausführen kann. Demnach wird erfindungsgemäß eine konfigurierbare Geräteinheit mit zwei Betriebsarten eingesetzt, wobei die Konfiguration softwarebasiert sein kann.

In einem ersten Betriebsmodus, genannt "Closed Mode", ist nur Software bzw. Firmware ausführbar, die vom Gerätehersteller autorisiert wurde. Üblicherweise weist die Software dazu eine digitale Signatur auf, die mit einem öffentlichen Herstellerschlüssel (Plattformschlüssel) auf dem Gerät überprüfbar ist.

Im sogenannten "Closed Mode" sind weiterhin Runtime-Integrity-Checks aktiv. Diese können zur Laufzeit überwachen, dass nur zugelassene Software(-Prozesse) bzw. Betriebsabläufe ausgeführt werden und dass Gerätekonfiguration bzw. Schutzmittel wie Schlüssel, Zertifikate etc. unverändert und unveränderbar sind.

In einem zweiten Betriebsmodus, genannt "Open Mode", kann ein Nutzer eigene Software bzw. geänderte Software laden und ausführen. Dazu kann er den ersten Betriebsmodus deaktivieren oder einen anderen Plattformschlüssel einrichten.

Die Geräteeinheit verfügt im "Closed Mode" vorzugsweise über eine Integritätsbestätigungsfunktion, die eine kryptographisch geschützte Gerätintegritätsinformation über eine Kommunikationsschnittstelle bereitstellt, z.B. eine Geräteauthentisierungsfunktion oder eine Geräteintegritätsattestierungsinformation.

Im "Open Mode" wird geräteseitig dagegen keine Gerätintegritätsinformation oder eine andere Gerätintegritätsinformation bereitgestellt.

Es kann z.B. der Betriebsmodus (open oder closed) in der Integritätsbestätigungsfunktion explizit einkodiert sein, z.B. als Flag. Es kann abhängig vom Betriebsmodus ein Schlüssel zur Bildung der kryptographischen Geräteintegritätsinformation ausgewählt bzw. freigegeben werden. Es können also zwei Integritätsbestätigungs-Schlüssel, einen Gerätehersteller-Integritätsbestätigungs-Schlüssel und einen Nutzerdefinierbaren Integritätsbestätigungs-Schlüssel geben.

Das oben genannte Hardware- oder Software- bzw. Firmware-Modul M, das die Entscheidung zwischen "Closed Mode" (geschlossenen bzw. geschützten Betriebsmodus) und "Open Mode" (offenen Betriebsmodus) trifft bzw. den ggf. einkodierten Betriebsmodus erkennt, soll so ausgestaltet sein, dass es nicht der eingangs beschriebenen GPL- oder einer ähnlichen Lizenz unterliegt. Zusätzlich darf das Modul (M) nicht veränderbar sein, d.h. es muss durch Integritätsschutzmaßnahmen (z.B. Secure Boot) abgesichert werden.

In einer Ausführungsform werden kryptographische Schlüssel, die zum Geräteintegritätsschutz im "closed mode" verwendet werden, gelöscht, oder dauerhaft bzw. temporär gesperrt, wenn der "open mode" aktiviert bzw. eingeleitet wird. In einer weiteren Ausführungsform wird eine Anfrage des Zertifikatswiderrufs bei einer Aktivierung des "open mode" von der Geräteeinheit erzeugt und ggf. an eine dritte Stelle z.B. eine Zertifikatsauthorisierungsstelle (Zertifikatsauthority) gesendet.

In einer weiteren Ausführungsform prüft das Gerät sein eigenes Gerätezertifikat (Geräteherstellerzertifikat). Dieses Zertifikat kann eine Information enthalten, z.B. in Form einer X.509v3 Erweiterung oder des Gerätebezeichners, ob das Gerätezertifikat für "closed mode" oder "open mode" vorgesehen ist. In einer weiteren Ausführungsform aktiviert das Modul (M) den Betriebsmodus (open, closed) abhängig vom konfigurierten Gerätezertifikat. Dies hat den Vorteil, das bekannte Technologien und Prozesse zur Zertifikatsausstellung und Verteilung verwendet werden können, um ein Gerät für
einen "open mode" freizuschalten. In einer weiteren Ausführungsform wählt die Geräteeinheit abhängig vom Betriebsmodus eines von mehreren konfigurierten Gerätezertifikaten für die Verwendung im Betrieb aus.

In einer weiteren Ausführungsform prüft das Gerät, ob das eigene Hersteller-Gerätezertifikat widerrufen bzw. gelöscht wurde (z.B. unter Verwendung einer Zertifikatswiderrufsliste (CRL) oder einer Zertifikatsstatusantwort (OCSP Response)).

Die Geräteeinheit ermöglicht die Aktivierung des "Open Mode", wenn das dem "Closed Mode" zugeordnete Geräteherstellerzertifikat zurück- bzw. widerrufen wurde. Dies hat den Vorteil, dass bekannte Technologien und Prozesse zum Zertifikatswiderruf verwendet werden können, um ein Gerät für einen "open mode" freizuschalten.

Weiterhin kann abhängig von dem Betriebsmodus "open" / "closed" neben den Software-bezogenen Funktionen auch eine Hardware-bezogen Funktion des Gerätes aktiviert oder deaktiviert bzw. konfiguriert werden (z.B. ein Vertrauensanker, eine Hardware-basierter Geräteintegritätüberwachung z.B. RIM bzw. Integrity Watchdog I, eine Hardware-basierte Selbsttestfunktion, ein Selbstüberwachungssensor, ein Tamper-Sensor zum Erkennen von Manipulationen oder eine Kommunikationseinheit, die z.B. ein Integritätsbestätigungssignal bereitstellt).

Im oben genannten Schritt S2 kann der Betriebsmodus auf unterschiedliche Art ermittelt bzw. konfiguriert und ggf. dann beibehalten, festgelegt bzw. ausgewählt werden:
- Geräte-Konfigurationseinstellungen (z.B. UEFI BIOS, Gerätekonfiguration)
- Sogenannte Jumper
- Eingabe eines Freischaltkodes zum Aktivieren des "Open Modes"
- Implizit über die Firmware-Signatur (der Closed-Mode wird bei Laden bzw. Starten einer mit einem Geräteherstellerschlüssel signierten Firmware aktiviert, ansonsten wird der Open Mode gestartet).
- Implizit über das konfigurierte Gerätezertifikat
- Über den oben erwähnten Widerrufstatus eines Gerätezertifikats
- Durch den Zustand eines im System verbauten Vertrauensankers
- Durch ein Aushandlungs-Protokoll mit einer dritten Stellen z.B. einem Remote Server

In einer Ausführungsform unterstützt die Geräteeinheit einen weiteren dritten Betriebsmodus, der gleichzeitig die beiden ersten und zweiten Betriebsmodi, "Combined Mode" genannt, zulässt. Dazu können z.B. zwei CPUs/SoCs (Ein-Chip-System) vorgesehen sein, oder es können mittels eines Hypervisors zwei separierte Ausführungsumgebungen auf einer gemeinsam genutzten Hardware bereitgestellt werden. Dieser "Combined Mode" kann einen dritten konfigurierbaren bzw. ermittelbaren bzw. wählbaren Betriebsmodus darstellen, oder kann dauerhaft als einziger kombinierter Betriebsmodus vorgesehen sein.

Im "Combined Mode" verfügt das Gerät über zwei Ausführungsumgebungen, eine "Closed Mode"-Ausführungsumgebung (Betriebsmodus) und eine "Open Mode"-Ausführungsumgebung. Für die "Open Mode"-Ausführungsumgebung kann ein Nutzer eigene Software oder geänderte Software laden und ausführen (z.B. zur Betriebs- bzw. Ausführungszeit, beim Systemstart, oder beim Einspielen eines Firmware-Updates). Für die "Closed Mode"-Ausführungsumgebung können dagegen nur autorisierte, d.h. mittels eines Geräteherstellerzertifizierten Softwaresignaturschlüssel signierte Anwendungen geladen werden. Secure Boot und Runtime Integrity Monitoring sind aktiv für die "Closed Mode"-Ausführungsumgebung, d.h. für die vom Hersteller signierten Teile der Software. D.h. nur die "Closed Mode"- Ausführungsumgebung wird durch die Geräteintegritätsschutzfunktionen erfasst.

In einer weiteren Ausführungsform unterstützt das Gerät ein Versiegeln von geladener Nutzersoftware (im "Open Mode" der Geräteeinheit bzw. für die "Open Mode"-Ausführungsumgebung). Hierbei ist zusätzlich zur Geräteintegritätsschutzfunktion für den "Closed Mode" eine zusätzliche Geräteintegritätsschutzfunktion für den "Open Mode" vorgesehen. Dabei kann ein Nutzer unter eigener Kontrolle, Software für den "Open Mode" laden. Durch ein "Versiegeln" der Geräteeinheitskonfiguration wird dieser vom Nutzer geladene Software-Stand festgefroren. Dabei erfolgt ein "Anlernen" der Referenzinformation für den Runtime Integrity Schutz der Geräteeinheit (Secure Boot, Runtime Integrity Monitor RIM).

Bei einem im versiegelten Zustand erfolgenden Secure Boot wird überprüft, dass der beim Versiegeln erfasste Software-Stand des "Open Mode" geladen wird. Dazu kann z.B. ein Hash-Wert des Software Stands beim Versiegeln erfasst und beim nachfolgenden Systemstarts überprüft werden, oder es kann die Nutzersoftware mit einem Geräteschlüssel durch die Geräteeinheit signiert werden. Weiterhin kann für ein Runtime Integrity Monitoring RIM die vom Nutzer geladene Software beim Versiegeln des Gerätes in die Referenzdatenbank (mit sogenannten "weißen" bzw. "schwarzen" Listen aufgenommen werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Geräteeinheit (GE) umfassend ein Modul (M), welches die Geräteeinheit (GE) mit einem Betriebszustand von unterschiedlichen Betriebszuständen beim Hochfahrablauf und/oder bei laufendem Betrieb der Geräteeinheit konfigurieren kann, wobei ein erster geschützter Betriebszustand der unterschiedlichen Betriebszustände dazu ausgelegt ist, das Ausführen von zumindest einem vorbestimmbaren Betriebsablauf zuzulassen und diesen gegebenenfalls mit festgelegten kryptographischen Mitteln zu schützen,
wobei mindestens ein zweiter Betriebszustand der unterschiedlichen Betriebszustände dazu ausgelegt ist, den ersten geschützten Betriebszustand zu deaktivieren und zumindest einen anderen änderbaren Betriebsablauf zuzulassen und diesen gegebenenfalls mit vorgebbaren kryptographischen Mitteln zu schützen, und
wobei, wenn der konfigurierte Betriebszustand dem ersten Betriebszustand entspricht, das Modul (M) diesen beibehält oder wenn der konfigurierte Betriebszustand dem mindestens zweiten Betriebszustand entspricht, das Modul (M) den ersten Betriebszustand deaktiviert und den mindestens zweiten Betriebszustand einleitet und/oder beibehält.

2. Geräteeinheit (GE) nach dem vorhergehenden Anspruch, **dadurch gekennzeichnet, dass** die Geräteeinheit als ein eingebettetes System oder als Teil eines eingebetteten Systems ausgestaltet ist.

3. Geräteeinheit (GE) nach einem der vorhergehenden Ansprüche, **dadurch gekennzeichnet, dass** geräteseitig, wenn der Betriebszustand während des Hochfahrablaufs und/oder bei laufendem Betrieb der Geräteeinheit geschützt werden soll, für beim Hochlauf geeignete und/oder im laufenden Betrieb geeignete Integritätsschutzmaßnahmen bereitgestellt sind.

4. Geräteeinheit (GE) nach dem vorhergehenden Anspruch, **dadurch gekennzeichnet, dass** die Integritätsschutzmaßnahmen des Weiteren eine Geräteauthentifizierung und/oder eine Geräteintegritätsattestierung umfassen.

5. Geräteeinheit (GE) nach einem der vorhergehenden Ansprüche 3 oder 4, **dadurch gekennzeichnet, dass** abhängig vom Betriebszustand wenigstens ein Schlüssel für die Integritätsschutzmaßnahmen geräteseitig oder von einem Nutzer bereitstellbar ist.

6. Geräteeinheit (GE) nach einem der vorhergehenden Ansprüche, **dadurch gekennzeichnet, dass** jeweils ein Gerätezertifikat für beide Betriebszustände zur Verfügung gestellt werden kann.

7. Geräteeinheit nach einem der vorhergehenden Ansprüche 3 bis 6, **dadurch gekennzeichnet, dass** die Deaktivierung des geschützten Betriebszustandes durch ein Löschen des wenigstens einen Schlüssels und/oder Widerruf des für den geschützten Betriebszustand zur Verfügung gestellten Gerätezertifikats durchführbar ist.

8. Geräteeinheit (GE) nach einem der vorhergehenden Ansprüche, **dadurch gekennzeichnet, dass** Teile der Geräteeinheit aktivierbar und/oder deaktivierbar sind.

9. Geräteeinheit (GE) nach einem der vorhergehenden Ansprüche, **dadurch gekennzeichnet, dass** das Modul (M) mittels ein oder mehrerer Software- und/oder Firmwareprogrammkodes und/oder Hardwareschaltung konfigurierbar ist.

10. Geräteeinheit (GE) nach dem vorhergehenden Anspruch, **dadurch gekennzeichnet, dass** der eine oder die Software- und/oder Firmwareprogrammkodes versiegelbar sind.

11. Geräteeinheit nach einem der vorhergehenden Ansprüche, **dadurch gekennzeichnet, dass** mindestens ein weiterer dritter Betriebszustand der Geräteeinheit dazu ausgelegt ist, den ersten und den zweiten Betriebszustand im Parallelbetrieb zuzulassen und gegebenenfalls kryptographisch zu schützen.

12. Geräteeinheit (GE) nach einem der vorhergehenden Ansprüche, **dadurch gekennzeichnet, dass** der erste, zweite und gegebenenfalls der dritte Betriebszustand durch Gerätekonfiguration, sogenannte Jumper, Aktivierungscodes und/oder durch den Schlüssel und/oder durch das Gerätezertifikat und/oder des Widerrufzustands des Gerätezertifikats und/oder durch einen Vertrauensankers und/oder durch eine Kommunikationsprotokoll mit einer weiteren Stelle festlegbar ist.

13. Verfahren zum Betreiben einer Geräteeinheit (GE) in einem Betriebszustand von unterschiedlichen Betriebszuständen beim Hochfahrablauf und/oder bei laufenden Betrieb der Geräteeinheit,
wobei in einem ersten geschützten Betriebszustand das Ausführen von zumindest einem vorbestimmbaren Betriebsablaufs zugelassen und diesen gegebenenfalls mit festgelegten kryptographischen Mitteln geschützt wird (S4, S5) und
wobei in einem weiteren zweiten Betriebszustand der erste geschützte Betriebszustand deaktiviert wird und zumindest ein anderer änderbarer Betriebsablauf zugelassen und dieser gegebenenfalls mit vorgebbaren kryptographischen Mitteln geschützt wird, wobei der Betriebszustand vor und/oder während des Hochfahrablaufs und/oder des laufenden Betriebs konfiguriert wird und wenn der konfigurierte Betriebszustand dem ersten Betriebszustand entspricht (S3), dann diesen beizubehalten oder wenn der konfigurierte Betriebszustand dem mindestens zweiten Betriebszustand entspricht, den ersten Betriebszustand zu deaktivieren und den mindestens zweiten Betriebszustand einzuleiten und/oder beizubehalten.

14. Verfahren nach dem vorhergehenden Anspruch, **dadurch gekennzeichnet, dass**, wenn der Betriebszustand während des Hochfahrablaufs und/oder bei laufendem Betrieb der Geräteeinheit geschützt werden soll, für beim Hochlauf geeignete und/oder im laufenden Betrieb geeignete Integritätsschutzmaßnahmen bereitgestellt werden.

15. Verfahren nach dem vorhergehenden Anspruch, **dadurch gekennzeichnet, dass** die Integritätsschutzmaßnahmen (S4, S5) des Weiteren eine Geräteauthentifizierung und/oder eine Geräteintegritätsattestierung umfassen.

16. Verfahren nach einem der vorhergehenden Ansprüche 14 oder 15, **dadurch gekennzeichnet, dass** abhängig vom Betriebszustand wenigstens ein Schlüssel für die Integritätsschutzmaßnahmen bereitgestellt wird.

17. Verfahren nach einem der vorhergehenden Verfahrensansprüche, **dadurch gekennzeichnet, dass** jeweils ein Gerätezertifikat für beide Betriebszustände zur Verfügung gestellt wird.

18. Verfahren nach einem der vorhergehenden Ansprüche 14 bis 17, **dadurch gekennzeichnet, dass** die Deaktivierung des geschützten Betriebszustandes durch ein Löschen des wenigstens einen Schlüssels und/oder Widerruf des für den geschützten Betriebszustand zur Verfügung gestellten Gerätezertifikats durchgeführt wird.

19. Verfahren nach einem der vorhergehenden Verfahrensansprüche, **dadurch gekennzeichnet, dass** mindestens ein weiterer dritter Betriebszustand der Geräteeinheit den ersten und den zweiten Betriebszustand im Parallelbetrieb zulässt und gegebenenfalls kryptographisch schützt.

20. Verfahren nach einem der vorhergehenden Vorrichtungsansprüche, **dadurch gekennzeichnet, dass** der erste, zweite und gegebenenfalls der dritte Betriebszustand durch Gerätekonfiguration, sogenannte Jumper, Aktivierungscodes und/oder durch den Schlüssel und/oder durch das Gerätezertifikat und/oder des Widerrufzustands des Gerätezertifikats und/oder durch einen Vertrauensankers und/oder durch eine Kommunikationsprotokoll mit einer weiteren Stelle festgelegt wird.

21. Computerprogrammprodukt mit mindestens einem Computerprogramm, das Mittel zur Durchführung des Verfahrens nach einem der vorstehenden Verfahrensansprüche aufweist, wenn das mindestens eine Computerprogramm in den Speicher einer Geräteeinheit nach einem der vorstehenden Ansprüche 1 bis 12 ladbar ist und zur Ausführung gebracht wird.
